# EUROPÄISCHE PATENTSCHRIFT

(11) **EP 1 859 518 B1**
(45) Veröffentlichungstag und Bekanntmachung des Hinweises auf die Patenterteilung: **19.09.2012**
(21) Anmeldenummer: 06706798.3
(22) Anmeldetag: 10.02.2006
(51) Int. Cl.: H02B 1/21

(54) **GERÄTEADAPTER**
DEVICE ADAPTER
ADAPTATEUR D'APPAREIL

(30) Priorität: 04.03.2005 DE 102005009993
(43) Veröffentlichungstag der Anmeldung: 28.11.2007
(73) Patentinhaber: Rittal GmbH & Co. KG, 35745 Herborn (DE)
(72) Erfinder: WAGENER, Hans, 35716 Dietzhölztal 2 (DE)
(74) Vertreter: Tönhardt, Marion
(86) Internationale Anmeldenummer: PCT/EP2006/001167
(87) Internationale Veröffentlichungsnummer: WO 2006/094595

(56) Entgegenhaltungen:
- US-A- 6 086 389

## Beschreibung

Die Erfindung bezieht sich auf einen Geräteadapter mit einem Basisteil, das auf seiner Unterseite mit Schienenaufnahmen zum Anbringen und Kontaktieren an Stromsammelschienen versehen ist und auf seiner Oberseite eine mit Verbindungsmitteln lösbar befestigte Aufbauvorrichtung mit zwei parallel voneinander beabstandeten Längsleisten zum Ankoppeln elektrischer Geräte oder Installationseinheiten trägt.

Ein Geräteadapter dieser Art ist in der DE 197 55 848 C2 angegeben. Bei diesem bekannten Geräteadapter sind auf der Oberseite eines gehäuseartigen Basisteils entlang der Längsränder Längsleisten aufgesetzt und mit dem Basisteil mittels an den Längsleisten seitlich nach unten abstehend angeformter federnder Rastzungen verrastet. Die Rastzungen liegen im eingerasteten Zustand in an den Längsseitenwänden des Basisteils eingearbeiteten Ausnehmungen. Die Längsleisten weisen jeweilige, senkrecht zur Oberseite des Basisteils gerichtete Lochreihen auf, über die Geräte gegebenenfalls mit geeigneten Befestigungselementen angekoppelt werden können. Zum Entfernen der Längsleisten müssen die Rastzungen aus ihrer Eingriffstellung gelöst werden, womit entsprechende Umstände verbunden sind.

Auch in der DE 298 11 379 U1 ist ein Geräteadapter mit seitlich entlang der Längsränder auf einem Basisteil angebrachten Längsleisten gezeigt. Zum Ankoppeln von Geräten ist auf den Längsleisten ein in Längsrichtung verschiebbares Aufsatzteil angebracht, wobei die Verbindung auch lösbar ausgeführt sein kann, diesbezüglich aber keine näheren Ausführungen gemacht sind.

Aus der US-A-6 086 389 ist ein Guäteadapter gemäβ Oberbegrift des Anspruches 1 bekannt.

Der Erfindung liegt die Aufgabe zugrunde, einen Geräteadapter der eingangs genannten Art bereitzustellen, der bei einfachem Aufbau und einfacher Handhabung variable Montagemöglichkeiten bietet.

Diese Aufgabe wird mit den Merkmalen des Anspruches 1 gelöst. Hierbei ist vorgesehen, dass die Verbindungsmittel als auf der Unterseite der Längsleisten angeformte, vorstehende, hakenartige Einhängeelemente ausgebildet sind, die in daran angepasste Aufnahmeöffnungen auf der Oberseite des Basisteils senk-recht einführbar und durch eine Verschiebung in Längsrichtung im Bereich hinter den Aufnahmeöffnungen auf deren von der Oberseite abgelegenen Seite einhängbar sind, und dass zum Arretieren der eingehängten Stellung der Längsleisten ein freigebbares Arretierelement vorhanden ist. Mit diesen Maßnahmen können die Längsleisten auf einfache Weise auf der Oberseite des Basisteils montiert und auch gelöst werden.

Dabei bestehen für die Fertigung und die Handhabung günstige Ausgestaltungsvarianten darin, dass die Einhängeelemente in Verschieberichtung vorstehende Endabschnitte aufweisen oder dass die Einhängeelemente verbreiterte Endabschnitte aufweisen und die Aufnahmeöffnungen als in Längsrichtung ausgerichtete schlüssellochförmige Öffnungen ausgebildet sind. Mit dem Arretierelement werden die Längsleisten in ihrer Montagestellung zuverlässig gesichert.

Zu einer einfachen Handhabung tragen dabei die Maßnahmen bei, dass das Arretierelement als entnehmbarer steckbarer und/oder verrastbarer Stift, der senkrecht von der Oberseite durch eine angepasste Durchführöffnung der betreffenden Längsleiste in eine angepasste, in der eingehängten Stellung fluchtende Arretierelementaufnahme einsetzbar ist, oder dass das Arretierelement als an der Längsleiste oder dem Basisteil angeformtes Rastelement ausgebildet ist, das in ein Rastgegenelement an dem Basisteil oder der Längsleiste eingreift.

Ist vorgesehen, dass die beiden auf den seitlichen Randbereichen des Basisteils angebrachten oder anzubringenden Längsleisten über zwei lösbare Querleisten mitein-ander verbunden sind, kann eine Einheit aus den beiden Längsleisten und den Querleisten vormontiert und einfach auf dem Basisteil angebracht werden.

Eine einfache Fertigung und Handhabung wird dadurch begünstigt, dass die Querleisten entsprechenden Querschnitt wie die Längsleisten aufweisen und an den beiderseitigen Endabschnitten auf ihrer Unterseite senkrecht nach unten vorstehende Halteschenkel aufweisen.

Ferner tragen zu einer einfachen, stabilen Montage die Maßnahmen bei, dass auf den einander zugekehrten Innenseiten der Längsleisten in aufeinander abgestimmter Position gegeneinander gerichtete Querzapfen angeformt sind und dass die Querleisten zumindest in ihren Endabschnitten in ihrer Längsrichtung verlaufende, am Ende offene und in ihrem Querschnitt an den Querschnitt der Querzapfen angepasste Hohlräume zum Einstecken der Querzapfen aufweisen.

Ist des Weiteren vorgesehen, dass die beiden Längsleisten im angebrachten Zustand mit Endabschnitten das Basisteil auf einer Stirnseite überragen und dass in dem Winkelbereich zwischen der Stirnseite des Basisteils und der Unterseite der Längsleiste ein Stützmittel angebracht ist, ergeben sich auch auf dem überstehenden Teil der Längsleisten Montagemöglichkeiten. Hierbei wird die Stabilität durch das Stützmittel gesteigert.

Eine einfache, stabile Anbringung mit dem Stützmittel ergibt sich dabei dadurch, dass das Stützmittel auf seiner der Stirnseite des Basisteils zugekehrten Seite mit einer Haltestruktur versehen ist, die im angebrachten Zustand der Längsleisten in eine jeweilige zu ihr komplementäre Stützmittelaufnahme in Eingriff gebracht ist.

Eine vorteilhafte Ausgestaltung für die Handhabung des Geräteadapters besteht ferner darin, dass eine Längsleiste im angebrachten Zustand mit ihrem einen Ende um einen bestimmten Abstand vor der betreffenden Stirnseite des Basisteils endet und dass in dem freigelassenen Abschnitt des Basisteils eine Handhabe zum Betätigen eines Riegels des Geräteadapters angeordnet ist.

Ein einfaches Ankoppeln von Geräten oder Installationseinheiten wird dadurch begünstigt, dass auf der Oberseite der beiden parallel beabstandeten Längsleisten ein den Parallelabstand überbrückendes Aufsatzteil zum Ankoppeln von Geräten oder Installationseinheiten in Längsrichtung entlang den Längsleisten verschiebbar eingerastet ist und mittels Befestigungsmitteln in einer wählbaren Position auf den Längsseiten festlegbar ist.

Die Erfindung wird nachfolgend anhand von Ausführungsbeispielen unter Bezugnahme auf die Zeichnungen näher erläutert. Es zeigen:
- Fig. 1: einen Geräteadapter mit aufgebrachter Aufbauvorrichtung in perspektivischer Ansicht,
- Fig. 2: den Geräteadapter nach Fig. 1 mit abgenommener Aufbauvorrichtung in perspektivischer Ansicht,
- Fig. 3: die in den Fig. 1 und 2 gezeigte Aufbauvorrichtung in perspektivischer Ansicht,
- Fig. 4: die Aufbauvorrichtung nach Fig. 3 in auseinander genommener, perspektivischer Darstellung,
- Fig. 5: eine seitliche Ansicht des Geräteadapters nach Fig. 1 mit Hakenteilen zum Anbringen an Stromsammelschienen und
- Fig. 6: den Geräteadapter nach Fig. 5 mit abgenommener Aufbauvorrichtung.

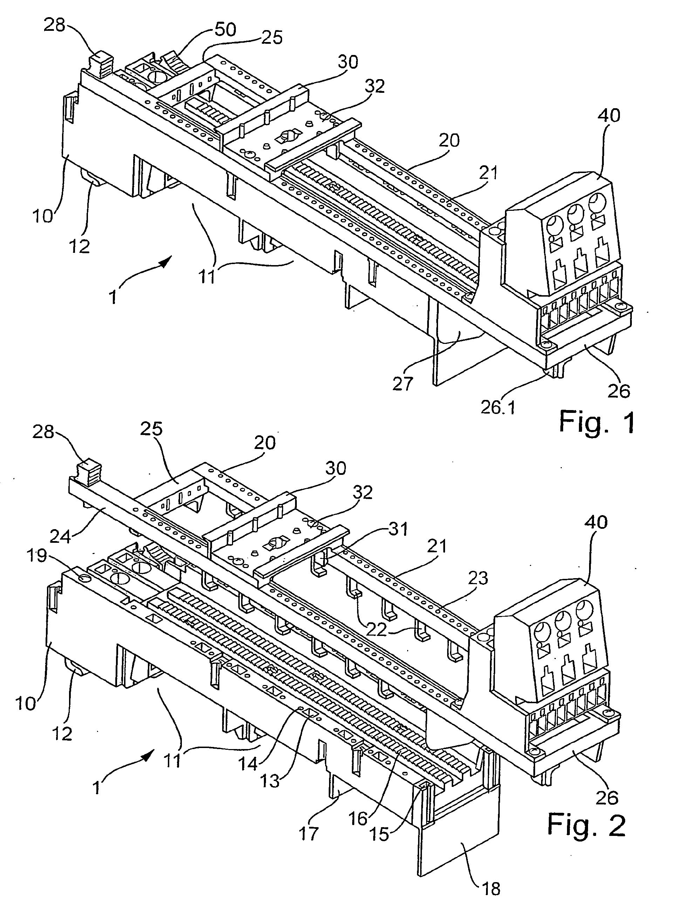

Fig. 1 zeigt einen Geräteadapter 1 mit einem Basisteil 10 und einer darauf aufgenommenen Aufbauvorrichtung 20 mit zwei auf den Längsrändern des Basisteils 10 parallel beabstandet angeordneten Längsleisten 21, 24 und diese verbindenden Querleisten 25, 26. Auf den Längsleisten 21, 24 ist zum einfachen Anbringen von Geräten bzw. Installationseinheiten ein den Abstand zwischen den beiden Längsleisten überbrückendes Aufsatzteil 30 in Form einer Hutschiene mit seiner Basis auf der Oberseite der Längsleisten 21, 24 aufgelegt und daran mittels Befestigungsmitteln 32 in Form von Schrauben festgelegt, wie auch die Fig. 2, 3, 5 und 6 zeigen. Bevor das Aufsatzteil 30 in seiner end-gültigen Position festgelegt wird, wird es auf den Längsleisten mittels nach unten vorstehender rastender Halteelemente 31 an diesen fixiert und kann entlang den Längsleisten 21, 24 in die gewünschte Position verschoben werden. Hierbei greift zum vorübergehenden Arretieren der Verschiebeposition ein (nicht gezeigter) Rasthebel mit Rastnase in eine auf der Oberseite des Basisteils 10 eingearbeitete, längs verlaufende Zahnung mit schrägen und steilen Flanken ein. Auf der Oberseite der Längsleisten 21, 24 ist an einem über die eine Stirnseite des im Wesentlichen quaderförmigen Basisteils 10 überstehenden Abschnitt eine Installationseinheit in Form einer Anschlusseinheit 40 mittels Schrauben angebracht, die in senkrecht zur Oberseite der Aufbauvorrichtung 20 bzw. des Geräteadapters 1 in die Längsleisten 21, 24 eingebrachte Löcher eingreifen. Die Löcher bilden dabei in den Längsleisten 21, 24 eine jeweilige Lochreihe mit einem bestimmten Raster.

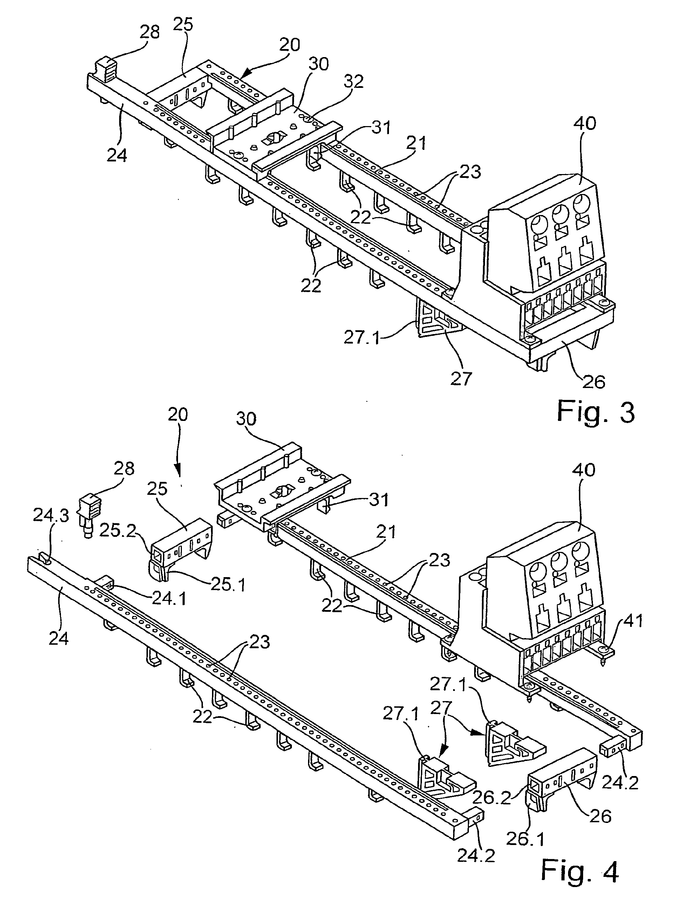

Wie insbesondere aus den Fig. 2, 3, 4 und 6 ersichtlich, sind auf der Unterseite der Aufbauvorrichtung 20, und zwar an der Unterseite der Längsleisten 21, 24 nach unten abstehende Verbindungselemente in Form von Einhängeelementen 22 angeformt. ln der Oberseite des Basisteils 10 sind in der Nähe der Längsränder an den größten Querschnitt der Einhängeelemente 22 angepasste Aufnahmeöffnungen 23 eingearbeitet, die in ihrer Anzahl und Position auf die Einhängeelemente 22 abgestimmt sind. An der Unterseite der Aufnahmeöffnungen 13 sind Absätze angeordnet, die im angebrachten Zustand der Aufbauvorrichtung 20 von den hakenartigen Endabschnitten der Einhängeelemente 22 hintergriffen werden. Die Tiefe der Aufnahmeöffnungen 13 bis zu den Absätzen ist auf die lichte Weise zwischen der Unterseite der Längsleisten 21, 24 und der Oberseite der Hakenteile abgestimmt. Zum Anbringen der Aufbauvorrichtung 20 werden die Längsleisten 21 mit den Einhängeelementen 22 senkrecht zur Oberseite des Basisteils 10 in die Aufnahmeöffnungen 13 eingeführt und anschließend in Längsrichtung des Basisteils 10 verschoben, so dass die ebenfalls in Verschieberrichtung vorstehenden Hakenteile in ihre Halteposition gebracht werden. In der Halteposition der Aufbauvorrichtung 20 wird diese mittels eines Arretierelementes 28 an einer Längsleiste 24 oder alternativ beiden Längsleisten 21, 24 mittels eines stiftartigen Arretierelementes 28 gegen ein Verschieben fixiert, wobei das Arretierelement 28 mit einem Schaftteil in eine auf der Oberseite des Basisteils 10 an entsprechender Stelle eingearbeitete Arretierelementaufnahme 19 vorzugsweise rastend eingreift. In der betreffenden Längsleiste 24 ist hierzu, wie insbesondere aus Fig. 4 ersichtlich, eine im eingehängten Zustand der Aufbauvorrichtung 20 mit der Arretierelementaufnahme 19 fluchtende Durchführöffnung 24.3 eingebracht. Neben den Aufnahmeöffnungen 13 sind in der Oberseite des Basisteils 10 Bohrungen 14 eingebracht, mit denen entweder die Längsleisten 21, 24 zusätzlich fixiert werden können oder unmittelbar auf der Oberseite des Basisteils 10 andere Aufbaueinheiten angebracht werden können.

Wie die Fig. 4 weiterhin zeigt, sind die Längsleisten 21, 24 auf ihren einander zugekehrten Seiten mit sich fluchtend gegenüberliegenden Querzapfen 24.1, 24.2 zum Verbinden mit den Querleisten 25, 26 versehen. Hierzu sind die Querleisten 25, 26, die vorteilhaft gleichen Querschnitt wie die Längsleisten 21, 24 aufweisen, zumindest in ihren Endabschnitten mit an den Querschnitt der Querzapfen 24.1, 24.2 im Querschnitt angepassten Hohlräumen 25.2, 26.2 versehen. Auf diese Weise kann die Aufbauvorrichtung 20 vor ihrer Montage auf dem Basisteil 10 mittels einfacher Steckmontage vormoniert werden, wodurch die Anbringung der Aufbauvorrichtung 20 auf dem Basisteil 10 einfach vorgenommen werden kann. Die Querleisten 25, 26 sind auf ihrer Unterseite mit daran angeformten Halteschenkeln 25.1, 26.1 versehen, die zum Fixieren an dem Basisteil 10 zusätzlich noch mit Rastelementen ausgestattet sein können und mit Gegenhalteelementen des Basisteils 10 zusammenwirken.

Wie aus den Fig. weiterhin ersichtlich, ist in dem Winkelbereich zwischen den über die betreffende Stirnseite des Basisteils 10 vorstehenden Endabschnitten der Längsleisten 21, 24 und der stirnseitigen Abschlusswand 18 des Basisteils 10 ein in seitlicher Ansicht dreieckförmiges, rechtwinkliges Stützmittel 27 angeordnet, das auf seiner der Abschlusswand 18 zugekehrten Seite mit einer Haltestruktur 27.1 in Form einer angeformten, im Querschnitt T-förmigen oder schwalbenschwanzförmigen Rippe versehen ist, die in eine an der Stirnseite des Basisteils 10 angeordnete komplementäre Haltemittelaufnahme 15 in Form einer hinterschnittenen T-Nut eingreift. Bei der Montage wird vorteilhaft zuerst das Stützmittel 27 mit seiner Haltestruktur 27.1 in die Stützmittelaufnahme 15 eingeschoben und anschließend die Aufbauvorrichtung 20 aufgebracht und festgehakt. Wie z.B. Fig. 2 zeigt, kann die Anschlusseinheit 40 durch die Längsleisten 21, 24 mit Befestigungsschrauben auch mit dem Stützmittel 27 verbunden werden.

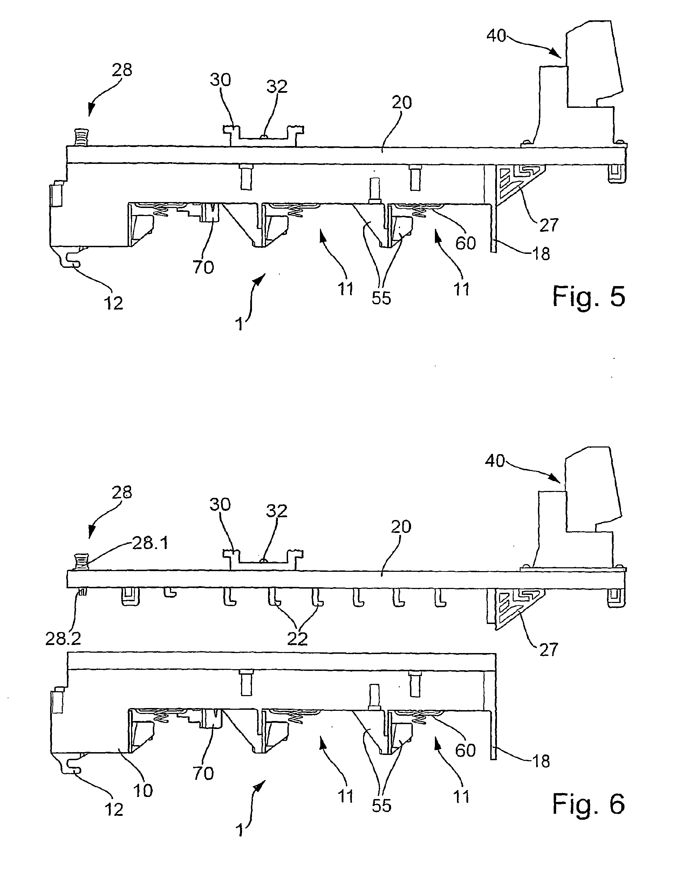

Wie die Fig. 1 und 2 des Weiteren zeigen, sind an der Unterseite des Basisteils 10 drei Schienenaufnahmen 11 ausgebildet, in denen quer zu dem Basisteil 10 bzw. dem Geräteadapter 1 verlaufende Stromsammelschienen aufgenommen werden können. Die Schienenaufnahmen sind mittels quer zu dem Basisteil 10 verlaufender Begrenzungswände 17 voneinander getrennt. Zum Kontaktieren mit den Stromsammelschienen sind an der Unterseite des Basisteils 10 in den Schienenaufnahmen 11 Kontaktierabschnitte 60 für-die elektrische Kontaktierung der Stromsammelschienen angeordnet. An den Begrenzungswänden 17 können zum Anbringen des Geräteadapters 1 an den Stromsammelschienen Hakenteile 55 festgelegt werden, wie Fig. 5 zeigt. Zum Verriegeln des auf den Stromsammelschienen aufgebrachten Geräteadapters 1 ist in mindestens einer Schienenaufnahme 11, wie Fig. 6 zeigt, ein abgestuftes, in das Basisteil 10 gegen eine Federkraft zurückschiebbares Verriegelungselement 70 vorgesehen. Das Verriegelungselement 70 kann mittels einer auf der Oberseite des Basisteils 10 an dessen einem Endabschnitt vorstehenden Handhabe 50 entriegelt werden, so dass der Geräteadapter 1 von den Stromsammelschienen abgenommen werden kann. Zum Anbringen an einer Montageeinheit weist das Basisteil 10 an der Unterseite seines einen Endabschnittes zudem mindestens ein hakenförmiges Haltemittel 12 auf.

Um die Handhabe 50 für das Verriegelungselement 70 einfach bedienen zu können, ist die eine Längsleiste 21 an dem betreffenden Endabschnitt verkürzt, so dass die Handhabe 50 in diesem Bereich problemlos angeordnet und betätigt werden kann.

## Patentansprüche

1. Geräteadapter mit einem Basisteil (10), das auf seiner Unterseite mit Schienenaufnahmen (11) zum Anbringen und Kontaktieren an Stromsammelschienen versehen ist und auf seiner Oberseite eine mit Verbindungsmitteln lösbar befestigte Aufbauvorrichtung (20) mit zwei parallel voneinander beabstandeten Längsleisten (21, 24) zum Ankoppeln elektrischer Geräte oder Installationseinheiten (40) trägt, wobei
die Verbindungsmittel als auf der Unterseite der Längsleisten (21, 24) angeformte, vorstehende, hakenartige Einhängeelemente (22) ausgebildet sind, die in daran angepasste Aufnahmeöffnungen (13) auf der Oberseite des Basisteils (10) senkrecht einführbar sind, **dadurch gekennzeichnet, dass** die Längsleisten durch eine Verschiebung in Längsrichtung im Bereich hinter den Aufnahmeöffnungen (22) auf deren von der Oberseite abgelegenen Seite einhängbar sind, und
dass zum Arretieren der eingehängten Stellung der Längsleisten (21, 24) ein freigebbares Arretierelement (28) vorhanden ist.

2. Geräteadapter nach Anspruch 1,
**dadurch gekennzeichnet,**
**dass** die Einhängeelemente (22) in Verschieberichtung vorstehende Endabschnitte aufweisen oder
**dass** die Einhängeelemente (22) verbreiterte Endabschnitte aufweisen und die Aufnahmeöffnungen (22) als in Längsrichtung ausgerichtete schlüssellochförmige Öffnungen ausgebildet sind.

3. Geräteadapter nach Anspruch 1 oder 2,
**dadurch gekennzeichnet,**
**dass** das Arretierelement (28) als entnehmbarer steckbarer und/oder verrastbarer Stift, der senkrecht von der Oberseite durch eine angepasste Durchführöffnung (24.3) der betreffenden Längsleiste (24) in eine angepasste, in der eingehängten Stellung fluchtende Arretierelementaufnahme (19) einsetzbar ist, oder
**dass** das Arretierelement als an der Längsleiste (24) oder dem Basisteil (10) angeformtes Rastelement ausgebildet ist, das in ein Rastgegenelement an dem Basisteil (10) oder der Längsleiste (24) eingreift.

4. Geräteadapter nach einem der vorhergehenden Ansprüche,
**dadurch gekennzeichnet,**
**dass** die beiden auf den seitlichen Randbereichen des Basisteils (10) angebrachten oder anzubringenden Längsleisten (21, 24) über zwei lösbare Querleisten (25, 26) miteinander verbunden sind.

5. Geräteadapter nach Anspruch 4,
**dadurch gekennzeichnet,**
**dass** die Querleisten (25, 26) entsprechenden Querschnitt wie die Längsleisten (21, 24) aufweisen und an den beiderseitigen Endabschnitten auf ihrer Unterseite senkrecht nach unten vorstehende Halteschenkel (25.1, 26.1) aufweisen.

6. Geräteadapter nach Anspruch 4 oder 5,
**dadurch gekennzeichnet,**
**dass** auf den einander zugekehrten Innenseiten der Längsleisten (21, 24) in aufeinander abgestimmter Position gegeneinander gerichtete Querzapfen (24.1, 24.2) angeformt sind und
**dass** die Querleisten (25, 26) zumindest in ihren Endabschnitten in ihrer Längsrichtung verlaufende, am Ende offene und in ihrem Querschnitt an den Querschnitt der Querzapfen (24.1, 24.2) angepasste Hohlräume zum Einstecken der Querzapfen (24.1, 24.2) aufweisen.

7. Geräteadapter nach einem der vorhergehenden Ansprüche,
**dadurch gekennzeichnet,**
**dass** die beiden Längsleisten (21, 24) im angebrachten Zustand mit Endabschnitten das Basisteil (10) auf einer Stirnseite überragen und
**dass** in dem Winkelbereich zwischen der Stirnseite des Basisteils (10) und der Unterseite der Längsleiste ein Stützmittel (27) angebracht ist.

8. Geräteadapter nach Anspruch 7,
**dadurch gekennzeichnet,**
**dass** das Stützmittel (27) auf seiner der Stirnseite des Basisteils (10) zugekehrten Seite mit einer Haltestruktur (27.1) versehen ist, die im angebrachten Zustand der Längsleisten (21, 24) in eine jeweilige zu ihr komplementäre Stützmittelaufnahme (15) in Eingriff gebracht ist.

9. Geräteadapter nach einem der vorhergehenden Ansprüche,
**dadurch gekennzeichnet,**
**dass** eine Längsleiste (21) im angebrachten Zustand mit ihrem einen Ende um einen bestimmten Abstand vor der betreffenden Stirnseite des Basisteils (10) endet und
**dass** in dem freigelassenen Abschnitt des Basisteils (10) eine Handhabe (50) zum Betätigen eines Riegels des Geräteadapters angeordnet ist.

10. Geräteadapter nach einem der vorhergehenden Ansprüche,
**dadurch gekennzeichnet,**
**dass** auf der Oberseite der beiden parallel beabstandeten Längsleisten (21, 24) ein den Parallelabstand überbrückendes Aufsatzteil (30) zum Ankoppeln von Geräten oder Installationseinheiten in Längsrichtung entlang den Längsleisten (21, 24) verschiebbar eingerastet ist und mittels Befestigungsmitteln (32) in einer wählbaren Position auf den Längsseiten (21, 24) festlegbar ist.

## Claims

1. A device adapter comprising a base part (10), the bottom side of which is provided with bus bar receptacles to be mounted on and contacted with bus bars while the top side thereof supports a mounting device (20) that is removably fixed with the aid of connecting means and is equipped with two parallel spaced-apart longitudinal rails (21, 24) for coupling electric devices or house wiring units (40), wherein the connecting means are embodied as protruding, hook-type hanging elements (22) molded onto the bottom side of the longitudinal rails (21, 24) which can be vertically inserted into receiving holes (13) that are adjusted thereto and are located on the top side of the base part (10), **characterized in that** the longitudinal rails can be hung on the side of the receiving holes (22) facing away from the top side in the area behind the receiving holes (22) by performing a translation movement in the longitudinal direction and that a releasable locking element (28) is provided for locking the hung position of the longitudinal rails (21, 24).

2. The device adapter of claim 1, **characterized in that** the hanging elements (22) comprise end sections protruding in the translation direction or that the hanging elements (22) comprise enlarged end sections and the receiving openings (22) are embodied as key hole shaped openings aligned in the longitudinal direction.

3. The device adapter of claim 1 or 2, **characterized in that** the locking element (28) is embodied as a removable, pluggable and/or lockable pin, which can be inserted from the from the top side through an adjusted passing opening (24.3) of the respective longitudinal rail (24) perpendicularly into an adapted locking element receptacle (19) aligned in the hung-in position, or that the locking element is embodied as a latch element molded to the longitudinal rail (24) or to the base part (10) which engages into a locking counter element at the base part (10) or at the longitudinal rail (24).

4. The device adapter of any of the preceding claims, **characterized in that** the two longitudinal rails (21, 24) attached to or being attachable to the lateral edge regions of the base part (10) are connected via two detachable transverse rails (25, 26).

5. The device adapter of claim 4, **characterized in that** the transverse rails (25, 26) comprise a cross section corresponding to the longitudinal rails (21, 24) and comprise holding legs (25.1, 26.1) at both end sections on their bottom side which protrude vertically downwards.

6. The device adapter of claim 4 or 5, **characterized in that** at the inner sides of the longitudinal rails (21, 24) facing towards another oppositely directed transfer posts (24.1, 24.2) are molded at adjusted positions and that the transverse rails (25, 26) comprise, at least in their end sections, cavities for plugging in the transverse posts (24.1, 24.2) which have open ends extending in longitudinal direction and are adjusted to the cross section of the transverse posts (24.1, 24.2).

7. The device adapter of any of the preceding claims, **characterized in that** in an assembled state both longitudinal rails (21, 24) with end sections extend beyond the base part (10) at an end side thereof and that in the angular region between the end side of the base part (10) and the bottom side of the longitudinal rail a supporting means (27) is mounted.

8. The device adapter of claim 7, **characterized in that** the supporting means (27) is provided with a holding structure (27.1) on a side facing to the end side of the base part (10), which holding structure is, in an assembled state of the longitudinal rails (21, 24), engaged with a supporting means receptacle (15) complementary thereto.

9. The device adapter of any of the preceding claims, **characterized in that** a longitudinal rail (21) terminates, in an assembled state, with one of its ends at a predetermined distance of the respective end side of the base part (10) and that a manipulating means (50) is arranged in the exposed section of the base part (30) for actuating of a lock of the device adapter.

10. The device adapter of any of the preceding claims, **characterized in that** a top piece (30) bridging the parallel distance of the parallel spaced longitudinal rails (21, 24) for coupling of devices or installation units in longitudinal direction along the longitudinal rails (21, 24) is slidably latched on the top side of the longitudinal rails and may be attached with the aid of attachment means (32) in a selectable position on the longitudinal rails (21, 24).

## Revendications

1. Adaptateur d'appareil comprenant une partie de base (10), qui est dotée sur son côté inférieur de logements de rail (11) pour le placement et la mise en contact sur des rails de barres conductrices de courant et porte sur son côté supérieur un dispositif de montage (20), fixé de façon amovible avec des moyens de liaison, avec deux baguettes longitudinales (21, 24) espacées parallèlement l'une de l'autre, pour le couplage d'appareils électriques ou d'unités d'installation (40),
les moyens de liaison étant conçus sous forme d'éléments d'accrochage (22) formés sur le côté inférieur des baguettes longitudinales (21, 24), saillants, en forme de crochet, qui peuvent être introduits verticalement dans des ouvertures de logement (13) adaptées dessus sur le côté supérieur de la partie de base (10), **caractérisés en ce que** les baguettes longitudinales peuvent être accrochées par un coulissement dans le sens longitudinal dans la zone située derrière les ouvertures de logement (22) sur leur côté opposé au côté supérieur, et
**en ce qu'**un élément d'arrêt (28) pouvant être libéré est présent pour arrêter la position accrochée des baguettes longitudinales (21, 24)

2. Adaptateur d'appareil selon la revendication 1,
**caractérisé**
**en ce que** les éléments d'accrochage (22) présentent des parties d'extrémité dépassant dans le sens de coulissement ou
**en ce que** les éléments d'accrochage (22) présentent des tronçons d'extrémité élargis et les ouvertures de logement (22) sont conçues sous forme d'ouvertures orientées dans le sens de la longueur et en forme de trou de serrure.

3. Adaptateur d'appareil selon la revendication 1 ou 2,
**caractérisé**
**en ce que** l'élément d'arrêt (28) se présente sous forme d'une broche amovible, pouvant être enfichée et/ou encliquetée, qui peut être insérée verticalement depuis le côté supérieur à travers une ouverture d'introduction (24.3) adaptée de la baguette longitudinale (24) concernée dans un logement d'élément d'arrêt (19) adapté et aligné dans la position accrochée, ou
**en ce que** l'élément d'arrêt est conçu sous forme d'élément d'encliquetage formé sur la baguette longitudinale (24) ou la partie de base (10), lequel élément s'engage dans un contre-élément d'arrêt sur la partie de base (10) ou la baguette longitudinale (24).

4. Adaptateur d'appareil selon l'une des revendications précédentes,
**caractérisé**
**en ce que** les deux baguettes longitudinales (21, 24) placées ou à placer sur les zones de bord latérales de la partie de base (10) sont reliées les unes aux autres au moyen de deux baguettes transversales (25, 26) amovibles.

5. Adaptateur d'appareil selon la revendication 4,
**caractérisé**
**en ce que** les baguettes transversales (25, 26) présentent une section appropriée comme les baguettes longitudinales (21, 24) et présentent sur les tronçons d'extrémité situés des deux côtés sur leur côté inférieur des branches de retenue (25.1, 26.1) dépassant verticalement vers le bas.

6. Adaptateur d'appareil selon la revendication 4 ou 5
**caractérisé**
**en ce que** des tenons transversaux (24.1, 24.2) orientés dans le sens contraire sont formés sur les côtés intérieurs tournés les unes vers les autres des baguettes longitudinales (21, 24) dans une position adaptée les unes aux autres et
**en ce que** les baguettes transversales (25, 26) présentent au moins dans leurs tronçons d'extrémité des cavités agencées dans leur direction longitudinale, ouvertes sur l'extrémité et adaptées dans leur section à la section des tenons transversaux (24.1, 24.2) pour l'enfichage des tenons transversaux (24.1, 24.2)

7. Adaptateur d'appareil selon l'une des revendications précédentes,
**caractérisé**
**en ce que** les deux baguettes longitudinales (21, 24) dépassent dans l'état mis en place avec des tronçons d'extrémité de la partie de base (10) sur un côté avant et en ce qu'un moyen de soutien (27) est placé dans la plage d'angle entre le côté avant de la partie de base (10) et le côté inférieur de la baguette longitudinale.

8. Adaptateur d'appareil selon la revendication 7,
**caractérisé**
**en ce que** le moyen de soutien (27) est doté sur son côté, tourné vers le côté avant de la partie de base (10), d'une structure de retenue (27.1), qui est mise en place dans un logement de moyen de soutien (15) respectif, complémentaire par rapport à elle, dans l'état installé des baguettes longitudinales (21, 24).

9. Adaptateur d'appareil selon l'une des revendications précédentes,
**caractérisé**
**en ce qu'**une baguette longitudinale (21) se termine dans l'état installé par l'une de ses extrémités à une distance définie devant le côté avant concerné de la partie de base (10) et
**en ce qu'**une manette (50) destinée à l'actionnement d'un verrou de l'adaptateur d'appareil est disposée dans la partie libérée de la partie de base (10).

10. Adaptateur d'appareil selon l'une des revendications précédentes,
**caractérisé**
**en ce qu'**une partie rapportée (30) surmontant l'espacement parallèle est encliquetée de façon coulissante sur le côté supérieur des baguettes longitudinales (21, 24) espacées en parallèle pour l'accouplement d'appareils ou d'unités d'installation dans le sens longitudinal le long des baguettes longitudinales (21, 24) et peut être fixée à l'aide de moyens de fixation (32) dans une position pouvant être choisie sur les côtés longitudinaux (21, 24).
